# DEMANDE DE BREVET EUROPEEN

(11) **EP 3 418 963 A1**
(43) Date de publication de la demande: **26.12.2018**
(21) Numéro de dépôt: 18305780.1
(22) Date de dépôt: 20.06.2018
(51) Int. Cl.: G06Q 20/34, G06Q 20/40, G07F 7/08

(54) **PROCÉDÉ DE VÉRIFICATION DU PORTEUR D'UNE CARTE À PUCE À LECTEUR DE DONNÉES BIOMÉTRIQUES ÉCHANGEANT AVEC UN TERMINAL DE TRANSACTION**

(30) Priorité: 20.06.2017 FR 1755611
(71) Demandeur: Idemia Identity & Security France, 92130 Issy-les-Moulineaux (FR)
(72) Inventeur: FROMAGER, Sylvain, Jérôme, 92130 ISSY LES MOULINEAUX (FR); GERMAIN, François, 92130 ISSY LES MOULINEAUX (FR)
(74) Mandataire: Regimbeau

(57) **Abrégé**

L'invention concerne un procédé de vérification du porteur d'une carte à puce, ladite carte étant du type comportant un lecteur de données biométriques, dans lequel ladite carte échange avec un terminal de transaction lui-même équipé d'un lecteur de données biométriques, caractérisé en ce que la puce de ladite carte vérifie la disponibilité de données biométriques au niveau du lecteur de ladite carte et met en oeuvre deux traitements de vérification distincts selon que de telles données biométriques sont ou non disponibles au niveau dudit lecteur.

Elle concerne également la carte à puce à lecteur de données biométriques associée.

## Description

L'invention concerne le domaine des cartes à puce.

Plus précisément, elle propose un procédé de vérification du porteur d'une carte à puce qui comporte un lecteur de données biométriques, lorsque ladite carte échange avec un terminal de transaction.

Elle propose également une carte à puce adaptée à la mise en oeuvre de ce procédé.

### DOMAINE TECHNIQUE GÉNÉRAL ET ART ANTÉRIEUR

Les produits de l'environnement des cartes à puce sont soumis à des standards d'interopérabilité et notamment des contraintes en termes de dimension (0,84 mm épaisseur max.) ou de conformité à des stresses mécaniques, climatiques ou chimiques. Cet environnement est par ailleurs très concurrentiel et les coûts des produits sont un paramètre essentiel.

Grâce à la miniaturisation des lecteurs biométriques d'empreinte digitale, il a été possible d'intégrer ceux-ci dans l'environnement des cartes à puce.

Les cartes avec lecteur biométrique intégré ont généralement des lecteurs de petite dimension pour respecter les contraintes mécaniques subies par la carte. L'inconvénient est qu'un petit lecteur fournit donc une petite image du doigt et nécessite des algorithmes spécifiques pour pouvoir effectuer un match avec l'image stockée dans la carte.

Ces cartes biométriques peuvent aussi être utilisées dans des distributeurs de billets (ATM ou « Automated Teller Machine » selon la terminologie anglo-saxonne), des distributeurs de carburant ou bien d'autres automates. Ces dispositifs 'avalent' toute la carte et ne permettent donc pas au porteur de placer son doigt sur les lecteurs situés sur la carte ; par contre, de plus en plus de ces dispositifs (particulièrement les ATM) incorporent des lecteurs d'empreinte de grande taille (14x22mm) qui permettent de valider le paiement.

### PRÉSENTATION GÉNÉRALE DE L'INVENTION

Un but général de l'invention est de proposer une solution de carte à puce qui permette une utilisation plus large que dans l'art antérieur.

A cet effet, l'invention propose un procédé de vérification du porteur d'une carte à puce, ladite carte étant du type comportant un lecteur de données biométriques, dans lequel ladite carte échange avec un terminal de transaction lui-même équipé d'un lecteur de données biométriques, caractérisé en ce que la puce de ladite carte vérifie la disponibilité de données biométriques au niveau du lecteur de ladite carte et met en oeuvre deux traitements de vérification distincts selon que de telles données biométriques sont ou non disponibles au niveau dudit lecteur.

Un tel procédé permet une vérification du porteur à partir des données biométriques acquises au moyen d'un lecteur biométrique intégré, lorsque ces données sont disponibles. Il permet également une vérification du porteur par échange avec un terminal doté lui-même d'un lecteur biométrique lorsque le lecteur biométrique intégré ne peut pas être utilisé.

Notamment :
- lorsque des données biométriques sont disponibles au niveau du lecteur de la carte à puce, la puce de ladite carte met en oeuvre un traitement comparant ces données avec un premier jeu de données biométriques que mémorise ladite puce, ce traitement étant conforme à un premier algorithme,
- lorsque des données biométriques ne sont pas disponibles au niveau du lecteur de la carte à puce,
   - le terminal transmet à la puce de ladite carte des données biométriques lues par le lecteur de données biométriques du terminal et
   - la puce de ladite carte met en oeuvre un traitement comparant ces données avec un deuxième jeu de données biométriques que mémorise ladite puce, ce traitement étant conforme à un deuxième algorithme.

Le premier jeu de données biométriques de comparaison peut être codé sur moins de 100 octets.

Le traitement conforme au deuxième algorithme peut mettre en oeuvre une vérification selon un algorithme ISO.

Dans un mode de mise en oeuvre en particulier, lorsque des données biométriques sont disponibles au niveau du lecteur de la carte à puce, la puce de ladite carte transmet au terminal un premier jeu de données AIP, AFL et lorsque ces données biométriques ne sont pas disponibles la puce de ladite carte transmet au terminal un deuxième jeu de données AIP, AFL.

Les données biométriques sont par exemple des données d'empreintes digitales.

L'invention concerne également une carte à puce à lecteur de données biométriques (lecteur d'empreintes digitales), caractérisé en ce que la puce de ladite carte est adaptée pour mettre en oeuvre un procédé de vérification du type décrit ci-dessus.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 illustre schématiquement les échanges entre une carte à puce munie d'un lecteur biométrique et un terminal pour carte à puce intégrant lui-même un lecteur biométrique ;
- les figures 2a et 2b illustrent deux modes de mise en oeuvre de vérification du porteur selon qu'une image biométrique est acquise ou non par le lecteur de la carte à puce ;
- la figure 3 illustre différentes étapes du traitement de vérification mis en oeuvre dans le cas de l'utilisation du lecteur de la carte ;
- la figure 4 illustre différentes étapes du traitement de vérification mis en oeuvre dans le cas de l'utilisation du lecteur sur le terminal.

### DESCRIPTION D'UN OU PLUSIEURS MODES DE MISE EN OEUVRE ET DE RÉALISATION

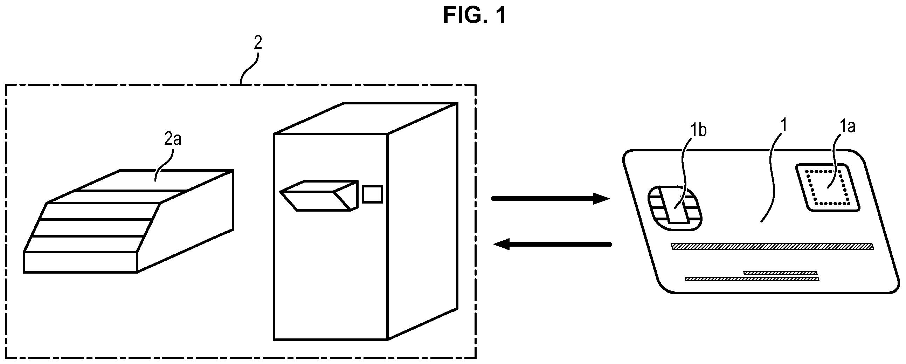

On a représenté sur la figure 1 une carte à puce 1 et un terminal 2 de lecture de carte à puce.

La carte à puce 1 comporte un lecteur biométrique la intégré et un processeur 1b. Le lecteur la est par exemple un lecteur d'empreintes digitales.

Le terminal 2 peut être de tout type (distributeur de billets, terminal de paiement, etc.). Il est également muni d'un lecteur biométrique 2a qui est par exemple également un lecteur d'empreintes digitales.

La puce 1b de la carte 1 intègre les différentes données nécessaires au traitement de vérification, et notamment :
- liste CVM (« Cardholder Verification Method » selon la terminologie anglo-saxonne classiquement utilisée)
- données AIP (« Application Interchange Profile » selon la terminologie anglo-saxonne classiquement utilisée)
- données AFL (« Application File Locator » selon la terminologie anglo-saxonne classiquement utilisée)
- etc.

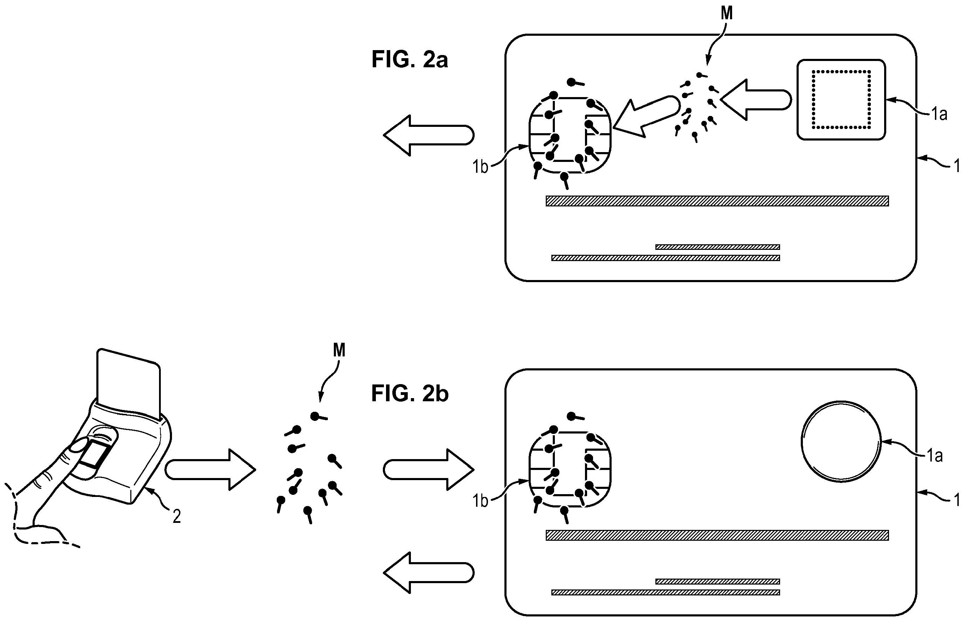

Plus précisément, la puce mémorise deux jeux de données AIP, AFL qui seront utilisés respectivement :
- l'un dans le cas d'une vérification du porteur à partir de la lecture de ses données biométriques par le lecteur la de la carte à puce 1 (Figure 2a),
- l'autre dans le cas d'une vérification du porteur à partir de la lecture de données biométriques par le lecteur 2a du terminal 2 (Figure 2b).

Dans le premier cas (figure 2a), l'image de petite dimension acquise par le lecteur la est traitée par la puce 1b pour en extraire les minuties M et pour effectuer une comparaison avec des minuties de référence préalablement mémorisées dans la carte (données de référence ou « template » selon la terminologie anglosaxonne).

Typiquement, ces minuties de référence et les minuties extraites sont les unes et les autres codées sur moins de 100 Octets.

Le traitement de comparaison mis en oeuvre est un traitement conforme à un algorithme spécifique adapté à cet effet.

Dans l'autre cas (figure 2b), l'image lue par le lecteur 2a est traitée par la puce pour en extraire les minuties M du porteur. Un traitement de vérification est mis en oeuvre au niveau de ladite puce selon un algorithme conforme à l'algorithme ISO classiquement utilisé par les différentes normes de transactions à partir de cartes à puces (EMV, Mastercard, Visa, etc.).

La comparaison est faite avec un deuxième jeu de minuties également préalablement mémorisées dans la puce 1b.

Ce jeu de minuties est typiquement codé sur 60 kOctets ou moins.

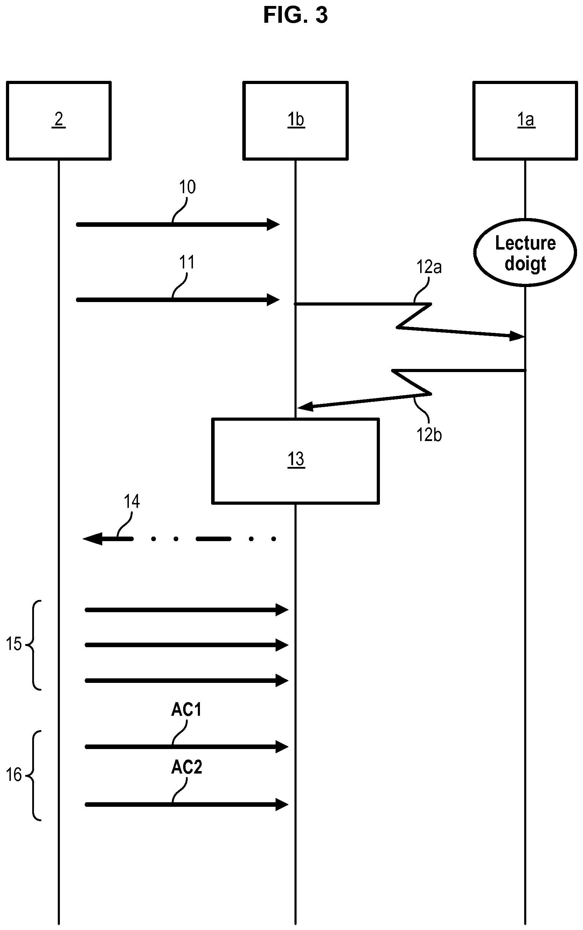

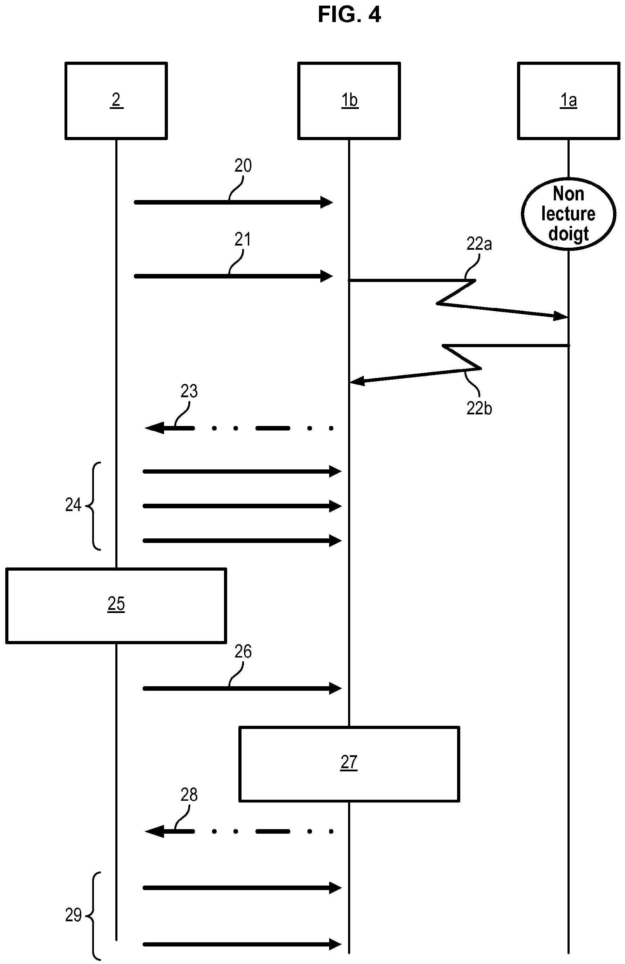

Les étapes d'une transaction sont illustrées sur les figures 3 et 4.

Comme on le comprendra à la lecture de ces figures, l'utilisation du lecteur biométrique et de l'algorithme propriétaire embarqué dans la carte est privilégié par rapport à l'utilisation de l'algorithme ISO.

Dans le cas de l'utilisation du lecteur situé sur la carte, le terminal 2 se connecte à la puce 1b (étape 10), puis il envoie à ladite puce 1b une requête lui demandant les options de traitement (étape 11).

La puce 1b vérifie alors qu'un doigt est posé sur le lecteur la et acquiert l'image d'empreinte correspondante (étapes 12a et 12b).

Elle traite cette image pour en extraire les minuties M et vérifie leur correspondance avec les minuties préalablement stockées pour le porteur (étape 13) (premier jeu de minuties).

Cette vérification se fait au moyen d'un algorithme propriétaire adapté.

Une fois cette vérification réalisée, la puce 1b transmet au terminal 2 les données AIP, AFL correspondant à ce mode de mise en oeuvre avec lecture par le lecteur de la carte (étape 14).

Le terminal 2 échange alors avec la puce 1b pour lui transmettre les différentes informations de transaction (échanges 15) et générer les différents cryptogrammes AC nécessaires (échanges 16).

Le cas où le lecteur de la carte ne peut pas être utilisé est illustré sur la figure 4.

Après connexion (étape 20) et après que le terminal 2 ait transmis à la puce 1b une requête relativement aux options de traitement, lorsque la puce 1b constate l'absence d'une image d'empreinte susceptible d'être acquise au niveau du lecteur 1b après un certain délai (étapes 22a et 22b), ladite puce 1 transmet au terminal les différentes données AIP, AFL du deuxième mode de traitement (transmission 23) (mode associé à l'algorithme ISO et se conformant aux différents standards existants (EMV, Mastercard, Visa, etc.)).

En retour, le terminal 2 transmet à la puce 1b les différentes informations de transaction (étapes 24) nécessaires à la transaction, ainsi que les données biométriques acquises au moyen du lecteur 2a dudit terminal 2 (acquisition 25 et transmission 26).

Ces données biométriques sont vérifiées par la puce 1b par comparaison avec l'autre jeu de données biométriques préalablement mémorisé (étape 27).

La correspondance est notamment vérifiée au moyen d'un algorithme compatible avec l'algorithme ISO.

Une fois la correspondance vérifiée, la puce 1b en transmet le résultat au terminal 2 (étape 28) qui génère les cryptogrammes d'application AC1, AC2 correspondant à la transaction (étapes 29).

## Revendications

1. Procédé de vérification du porteur d'une carte à puce, la carte comportant un premier lecteur de données biométriques, et la carte communiquant avec un terminal comprenant un deuxième lecteur de données biométriques, **caractérisé par** les étapes suivantes mises en oeuvre par la carte à puce :
- vérification de disponibilité de données biométriques au niveau du premier lecteur,
- si des données biométriques sont disponibles au niveau du premier lecteur, mise en oeuvre d'un premier traitement de vérification de ces données biométriques disponibles,
- s'il n'y a pas de données biométriques disponibles au niveau du premier lecteur, mise en oeuvre d'un deuxième traitement de vérification de données biométriques lues par le deuxième lecteur puis reçues par la carte à puce, le deuxième traitement étant distinct du premier traitement.

2. Procédé selon la revendication 1, dans lequel le premier traitement comprend une comparaison des données biométriques disponibles lues avec des données biométriques mémorisées par la carte à puce.

3. Procédé selon l'une des revendications 1 et 2, dans lequel le deuxième traitement comprend une comparaison des données biométriques lues par le deuxième lecteur puis reçues par la carte à puce avec des données biométriques mémorisées par la carte à puce.

4. Procédé selon l'une des revendications 2 et 3, dans lequel les données biométriques mémorisées par la carte à puce sont codées sur moins de 100 octets.

5. Procédé selon l'une des revendications précédentes, dans lequel le deuxième traitement comprend une vérification selon un algorithme ISO.

6. Procédé selon l'une des revendications précédentes, comprenant l'émission, par la carte à puce et à destination du terminal, de données propres à déclencher la transmission des données biométriques lues par le lecteur du terminal à la carte à puce.

7. Procédé selon la revendication précédente, dans lequel les données propres à déclencher ladite transmission sont émises lorsque des données biométriques ne sont pas disponibles au niveau du premier lecteur dans un délai prédéterminé.

8. Procédé de vérification du porteur d'une carte à puce selon l'une des revendications précédentes, dans lequel
- lorsque le premier traitement est mis en oeuvre, la carte transmet au terminal un premier jeu de données de type « Application Interchange Profile » (AIP), et de type « Application File Locator » (AFL) et
- lorsque le deuxième traitement est mis en oeuvre, la carte transmet au terminal un deuxième jeu de données AIP, AFL.

9. Procédé selon l'une des revendications précédentes, dans lequel les données biométriques sont des données d'empreintes digitales.

10. Carte à puce comprenant un premier lecteur de données biométriques, une interface de communication avec un terminal comprenant un deuxième lecteur de données biométriques, et une unité de traitement de données configurée pour
- vérifier une disponibilité de données biométrique au niveau du premier lecteur,
- si des données biométriques sont disponibles au niveau du premier lecteur, mettre en oeuvre un premier traitement de vérification de ces données biométriques disponibles,
- s'il n'y a pas de données biométriques disponibles au niveau du premier lecteur, mettre en oeuvre un deuxième traitement de vérification de données biométriques lues par le deuxième lecteur puis reçues par la carte à puce, le deuxième traitement étant distinct du premier traitement.

11. Système comprenant une carte à puce selon la revendication précédente, et un terminal comprenant un deuxième lecteur de données biométriques.
